# EUROPEAN PATENT SPECIFICATION

(11) **EP 3 121 751 B1**
(45) Date of publication and mention of the grant of the patent: **19.12.2018**
(21) Application number: 15178369.3
(22) Date of filing: 24.07.2015
(51) Int. Cl.: G06F 21/60, G06F 3/12

(54) **IMAGE FORMING APPARATUS AND MANAGEMENT METHOD**
BILDERZEUGUNGSVORRICHTUNG UND VERWALTUNGSVERFAHREN
APPAREIL DE FORMATION D'IMAGE ET PROCÉDÉ DE GESTION

(43) Date of publication of application: 25.01.2017
(73) Proprietor: Kabushiki Kaisha Toshiba, Tokyo 105-8001 (JP); Toshiba TEC Kabushiki Kaisha, Tokyo 141-8562 (JP)
(72) Inventor: MIYATA, Shungo, Shinagawa-ku, Tokyo 141-0032 (JP)
(74) Representative: Takeuchi, Maya

(56) References cited:
- JP-A- 2007 325 113
- US-A1- 2006 101 279
- US-B1- 6 202 158

## Description

### FIELD

Embodiments described herein relate generally to an image forming apparatus and a management method.

### BACKGROUND

In the related art, measures are taken as follows against a brute-force attack or a dictionary attack on the verification of an image forming apparatus such as a multifunction peripheral (MFP) . For example, a measure is taken by setting the minimum number of digits in a password through a password policy and providing a lock temporarily when verification fails a defined number of times.

However, even taking the measure cannot respond to an attack when an easily guessed password is set or when verification is not performed a defined number of times. Thus, security of verification may be decreased.

Document US2006101279 shows method which protets against attacks on a printing device by using temporary IDs which are deleted after a certain number of failed log ins.

Document US6202158 shows a network system with a detection function for unauthorized log ins.

### DESCRIPTION OF THE DRAWINGS

FIG. 1 is an exterior view illustrating an example of an image forming apparatus.
FIG. 2 is a block diagram illustrating a functional configuration of the image forming apparatus.
FIG. 3 is a schematic block diagram representing a functional configuration of a CPU.
FIG. 4 is a diagram illustrating a specific example of a user database.
FIG. 5 is a flowchart illustrating the flow of operation of the image forming apparatus.
FIG. 6 is a flowchart illustrating the flow of a login control process performed by a control unit in a first embodiment.
FIG. 7 is a flowchart illustrating the flow of a process when the login control process in the first embodiment is performed.
FIG. 8 is a flowchart illustrating the flow of the login control process in a second embodiment.
FIG. 9 is a diagram illustrating a list of post-change login methods.
FIG. 10 is a flowchart illustrating the flow of the login control process in a third embodiment.
FIG. 11 is a flowchart illustrating the flow of a process when the login control process in the third embodiment is performed.
FIG. 12 is a flowchart illustrating the flow of the login control process in a fourth embodiment.
FIG. 13 is a flowchart illustrating the flow of the login control process in a fifth embodiment.

### DETAILED DESCRIPTION

In order to resolve the above technical problem, there is provided an image forming apparatus includes: a detecting unit and a control unit. The detecting unit is configured to detect an attack on the apparatus on the basis of a history of logins to the apparatus. The control unit is configured to perform a login control process which controls a predetermined process related to a login to the apparatus when an attack is detected. The control unit is further configured to change a user name and a password that are registered in advance in the apparatus as the login control process.

The control unit may be configured to change a user name and a password that are registered in advance in the apparatus as the login control process.

The control unit may be configured to change a response time of each process after a login to a longer time than a currently set time as the login control process.

The control unit may be configured to change a login method as the login control process.

The control unit may be configured to lock an account of a user who does not log in for a preset period from the last login as the login control process.

The control unit may be configured to lock accounts of all users for a certain time as the login control process.

The present invention also relates to a management method of the image forming apparatus.

The method comprises detecting an attack on an image forming apparatus and performing a login control process.

The detecting step of an attack is performed on an image forming apparatus on the basis of a history of logins to the image forming apparatus.

The controlling step of a login control process is performed by controlling a predetermined process related to a login to the image forming apparatus when an attack is detected.

The controlling step may change a user name and a password that are registered in advance in the apparatus as the login control process.

The controlling step may comprise changing a response time of each process after a login to a longer time than a currently set time as the login control process.

The controlling step may comprise changing a login method as the login control process.

The controlling step may comprise locking an account of a user who does not log in for a preset period from the last login as the login control process.

The controlling step may comprise locking accounts of all users for a certain time as the login control process.

Hereinafter, an image forming apparatus and a management method of embodiments will be described with reference to the drawings.

First, a summary of an image forming apparatus 100 in the present embodiment will be described.

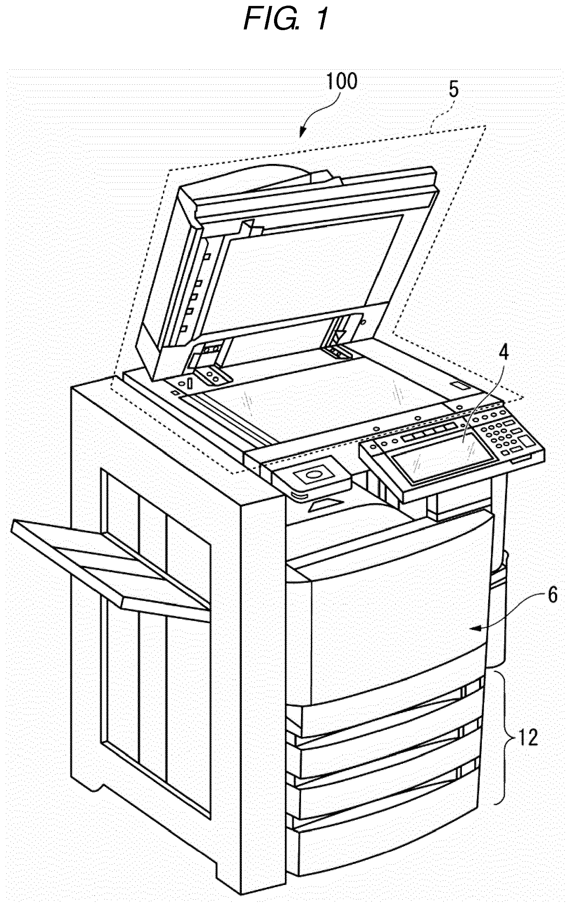

FIG. 1 is an exterior view illustrating an example of the image forming apparatus 100.

The image forming apparatus 100 reads a sheet and generates digital data (image file). The image forming apparatus 100 is, for example, a multifunction peripheral (MFP) that can form a toner image on a sheet. The sheet is, for example, a recording medium such as a paper on which an original document, characters, images, and the like are written. The sheet may be any type of object that the image forming apparatus 100 can read. The image forming apparatus 100 detects a brute-force attack or a dictionary attack and performs a predetermined control process.

In the example illustrated in FIG. 1, the image forming apparatus 100 is provided with a display unit 4, a scanner unit 5, a print unit 6, and a paper feeding unit 12.

The display unit 4 is an image displaying device such as a liquid crystal display or an organic electroluminescence (EL) display. The display unit 4 operates as an output interface and displays characters and images. For example, the display unit 4 displays a character string indicating an attack. The display unit 4 also operates as an input interface and receives input of an instruction from a user. The instruction that is input to the display unit 4 is input to the image forming apparatus 100.

The scanner unit 5 is a color scanner that is provided with, for example, a contact image sensor (CIS) or charge coupled devices (CCD) . The scanner unit 5 reads a sheet by using a sensor and generates digital data.

The print unit 6 prints images, characters, and the like on a sheet.

The paper feeding unit 12 feeds a print sheet to the print unit 6.

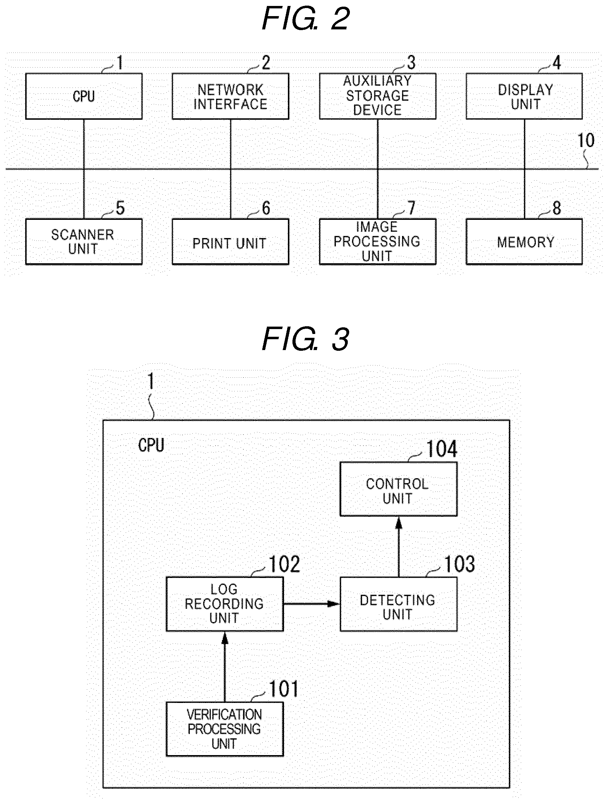

FIG. 2 is a block diagram illustrating a functional configuration of the image forming apparatus 100.

The image forming apparatus 100 is provided with a central processing unit (CPU) 1, a network interface 2, an auxiliary storage device 3, the display unit 4, the scanner unit 5, the print unit 6, an image processing unit 7, and a memory 8. The functional units of the image forming apparatus 100 are connected by an internal bus 10 and can input and output data between each other. The functional units described in FIG. 1 are given the same reference signs and will not be described here.

The CPU 1 controls the operation of each functional unit of the image forming apparatus 100. The CPU 1 performs various processes by executing programs. For example, the CPU 1 determines whether a predetermined condition is satisfied and detects the apparatus being attacked when the predetermined condition is satisfied. For example, the CPU 1 checks the time of a first defined number-th login (for example, less than 100 times) when logins are performed. The CPU 1 then determines that the predetermined condition is satisfied when the first defined number of logins are performed within a first time (for example, 10 minutes) . In this case, the CPU 1 detects an attack.

The CPU 1 performs a login control process when detecting an attack. The login control process is a process of controlling a predetermined login-related process.

A specific example of the login control process performed by the CPU 1 is as follows.

The CPU 1 changes a user name and a password that are registered in advance in the apparatus. The CPU 1 sets a response time of each process to be longer than a currently set time after a login. The CPU 1 changes a login method. The CPU 1 locks the account of a user (user name) who does not log in for a preset period after the date and time of the last login. The CPU 1 locks the accounts of all users for a preset time.

The login control process performed by the CPU 1 is not limited to the above process.

The network interface 2 transmits and receives data with another apparatus . The network interface 2 operates as an input interface and receives data that is transmitted from another apparatus. The network interface 2 also operates as an output interface and transmits data to another apparatus.

The auxiliary storage device 3 is, for example, a hard disk or a solid state drive (SSD) and stores various data. For example, the auxiliary storage device 3 stores a login-related log. The login-related log is, for example, history data such as the date and time when a verification process is performed by the image forming apparatus 100, a user name, and the result of the verification process. The auxiliary storage device 3 stores a user database. The user database is configured of records that represent information about users who are registered in advance in the image forming apparatus 100 (hereinafter, referred to as "user records").

The image processing unit 7 performs image processing on the digital data that the scanner unit 5 generates.

The memory 8 is, for example, a random access memory (RAM) . The memory 8 temporarily stores data that each functional unit of the image forming apparatus 100 uses. The memory 8 may store the digital data that the scanner unit 5 generates.

FIG. 3 is a schematic block diagram representing a functional configuration of the CPU 1.

The CPU 1 is provided with a verification processing unit 101, a log recording unit 102, a detecting unit 103, and a control unit 104 as illustrated in FIG. 3.

The verification processing unit 101 performs a verification process at the time of a login.

The log recording unit 102 records the login-related log on the auxiliary storage device 3 on the basis of the result of the verification process performed by the verification processing unit 101.

The detecting unit 103 detects an attack on the apparatus on the basis of a predetermined condition and the log stored on the auxiliary storage device 3. The detecting unit 103 also detects the end of an attack on the apparatus on the basis of the log stored on the auxiliary storage device 3.

The control unit 104 controls each functional unit of the CPU 1. The control unit 104 performs the login control process according to the result of detection of an attack on the apparatus by the detecting unit 103. The control unit 104 also ends the login control process according to the result of detection of the end of an attack on the apparatus by the detecting unit 103.

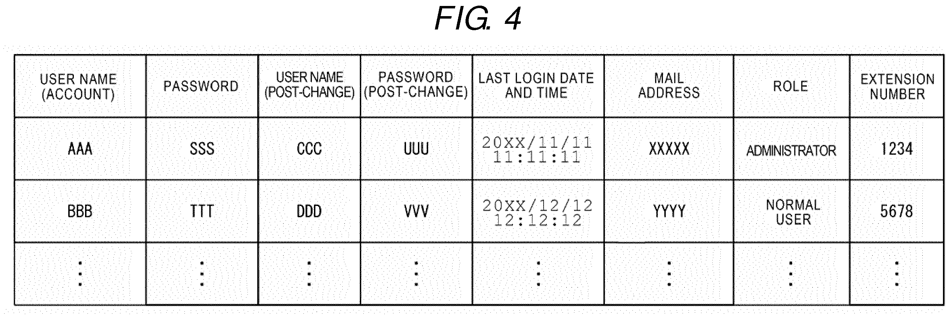

FIG. 4 is a diagram illustrating a specific example of the user database.

The user database includes multiple user records. The user record includes each value of a user name, a password, a post-change user name, a post-change password, a last login date and time, a mail address, a role, and an extension number. The value of the user name represents identifiable information that is used to identify a user who is registered in advance in the image forming apparatus 100. The value of the password represents a password that is used at the time of a login to the image forming apparatus 100. The value of the post-change user name represents the post-change value of the user name in the same user record. The value of the post-change password represents the post-change value of the password in the same user record. The value of the last login date and time represents the date and time when the user specified by the same user record logs in to the image forming apparatus 100 through a network for the last time. The value of the mail address represents a mail address of the user specified by the same user record. The value of the role represents the role of the user specified by the same user record in the image forming apparatus 100. Specific examples of the roles include an administrator, a normal user, and the like. An administrator has administrator privileges. The value of the extension number represents an extension number of the user specified by the same user record.

In the example illustrated in FIG. 4, there are two user names registered in the user database. The user names are "AAA" and "BBB". In FIG. 4, the user record that is registered uppermost in the user database has the value "AAA" for the user name, the value "SSS" for the password, the value "CCC" for the post-change user name, the value "UUU" for the post-change password, the value "20XX/11/11 11:11:11" for the last login date and time, the value "XXXXX" for the mail address, the value "administrator" for the role, and the value "1234" for the extension number. That is, the user record represents the fact that the password of the user identified by the user name "AAA" is "SSS", the post-change user name is "CCC", the post-change password is "UUU", the last date and time of a login to the image forming apparatus 100 through a network is "20XX/11/11 11:11:11", the mail address of the user is "XXXXX", the user is an "administrator", and the extension number of the user is "1234".

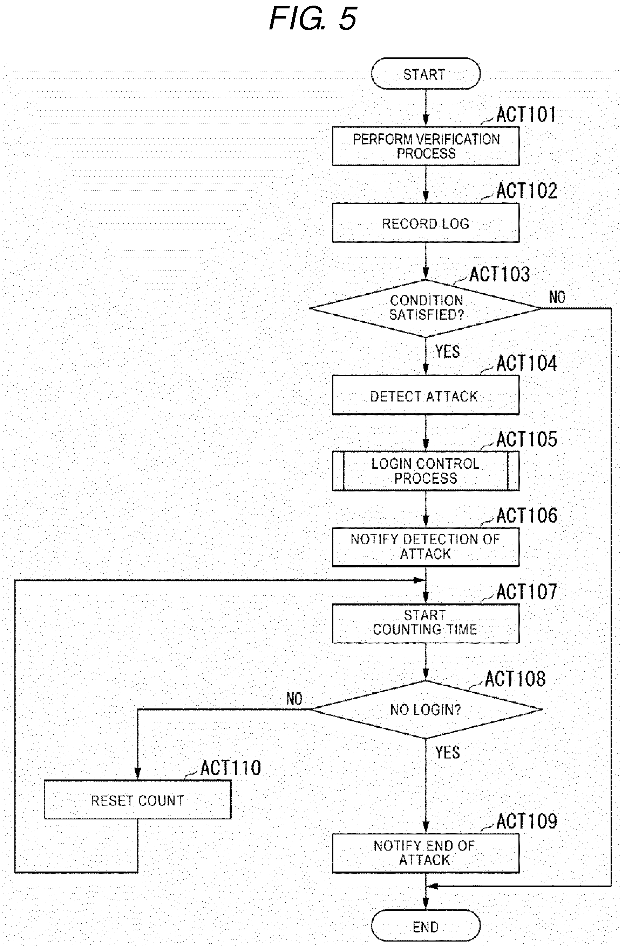

FIG. 5 is a flowchart illustrating the flow of operation of the image forming apparatus 100. The process in FIG. 5 is performed when a login operation is performed on the image forming apparatus 100. The login operation performed on the image forming apparatus 100 is, for example, input of a user name and a password.

The verification processing unit 101 performs a verification process on the basis of the user database stored on the auxiliary storage device 3 and the input user name and the input password (ACT 101) . The verification processing unit 101 determines that the user is valid when the input user name and the input password match the user name and the password registered in the user database. In this case, the verification processing unit 101 outputs the date and time of the verification process, the user name, and the verification result indicating a verification success to the log recording unit 102. The verification processing unit 101 determines that the user is invalid when the input user name and the input password do not match the user name and the password registered in the user database. In this case, the verification processing unit 101 outputs the date and time of the verification process, the user name, and the verification result indicating a verification failure to the log recording unit 102.

The log recording unit 102 records the verification result from the verification processing unit 101 on the auxiliary storage device 3 as a login-related log (ACT 102). The detecting unit 103 determines whether a predetermined condition is satisfied on the basis of the log stored on the auxiliary storage device 3 (ACT 103). When the predetermined condition is not satisfied (NO in ACT 103), the image forming apparatus 100 ends the process.

Meanwhile, the detecting unit 103 detects an attack on the apparatus (ACT 104) when the predetermined condition is satisfied (YES in ACT 103). The detecting unit 103 notifies the control unit 104 of the fact that an attack is detected. The control unit 104 performs the login control process when being notified of the fact that an attack is detected by the detecting unit 103 (ACT 105). The control unit 104 then controls the network interface 2 and notifies a user having administrator privileges (for example, an administrator) of the fact that an attack is detected (ACT 106).

The detecting unit 103 starts counting time (ACT 107). The detecting unit 103 determines whether there is no login during a second time (for example, five minutes) on the basis of the log stored on the auxiliary storage device 3 (ACT 108) .

The detecting unit 103 determines that the attack on the apparatus is ended when there is no login during the second time (YES in ACT 108). The detecting unit 103 then notifies the control unit 104 of the end of the attack (ACT 109). The control unit 104 ends the login control process when being notified of the end of the attack by the detecting unit 103. That is, the control unit 104 restores the login-related process to the pre-change state.

Meanwhile, in the process of ACT 108, the detecting unit 103 resets the count (ACT 110) when there is a login during the second time (NO in ACT 108) . The image forming apparatus 100 then repeats the process from ACT 107.

In the image forming apparatus 100 configured as above, the login control process is performed when an attack on the apparatus is detected, and different setting contents are set so as to replace current settings. Therefore, the image forming apparatus 100 can respond to a subsequent attack after the attack on the apparatus is detected. Thus, security can be improved.

Hereinafter, a modification example of the image forming apparatus 100 will be described.

A determination criterion of whether a predetermined condition is satisfied is not limited to the above determination criterion. For example, the detecting unit 103 may determine whether a predetermined condition is satisfied on the basis of the following determination criterion.

The detecting unit 103 checks how many times within a second defined number (for example, 100 times) verification fails for an unregistered user name when a login is performed. The detecting unit 103 then determines that a predetermined condition is satisfied when the number of verification failures for an unregistered user name is greater than or equal to a predetermined threshold as a result of the check. In this case, the detecting unit 103 detects an attack.

The image forming apparatus 100, when detecting an attack on the apparatus, may notify another image forming apparatus 100 in the same network of the attack. In this case, the image forming apparatus 100 notifies another image forming apparatus 100 including the content of the login control process performed by the apparatus in the notification. When the image forming apparatus 100 is configured as such, the image forming apparatus 100 that receives notification from another image forming apparatus 100 performs the same login control process as the other image forming apparatus 100.

Hereinafter, several specific examples of the image forming apparatus 100 will be described in detail.

### First Embodiment

In a first embodiment, the control unit 104 changes a user name and a password registered in advance in the apparatus as the login control process. For example, the control unit 104 changes a user name and a password by encrypting the user name and the password registered in the user database.

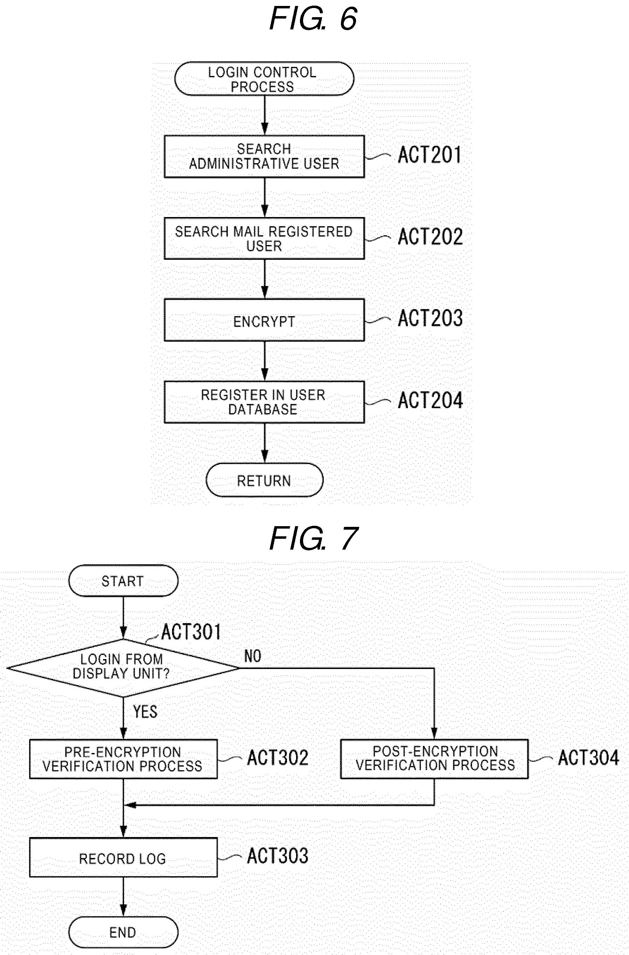

FIG. 6 is a flowchart illustrating the flow of the login control process performed by the control unit 104 in the first embodiment.

First, the control unit 104 searches the user database stored on the auxiliary storage device 3 for an administrative user (ACT 201). An administrative user represents a user having administrator privileges (for example, an administrator). Specifically, the control unit 104 first reads the user database stored on the auxiliary storage device 3. The control unit 104 then searches the read user database for a user, as an administrative user, for which a character string indicating an administrative user is registered in the role field.

Next, the control unit 104 searches for a mail registered user from the administrative user who is searched in the process of ACT 201 (ACT 202) . A mail registered user represents a user who registers a mail address. The control unit 104 encrypts the user name and the password of each mail registered user searched (ACT 203) . The user name and the password of the mail registered user are changed through this process. The control unit 104 then correlates the post-change user name and the post-change password with the mail registered user and registers the correlation in the user database (ACT 204).

The login control process performed by the control unit 104 in the first embodiment is ended.

The control unit 104 then controls the network interface 2 and causes the network interface 2 to notify the user for which the user name and the password are changed of the post-change user name and the post-change password. According to the control by the control unit 104, the network interface 2 transmits the post-change user name and the post-change password to the user for which the user name and the password are changed.

FIG. 7 is a flowchart illustrating the flow of a process when the login control process in the first embodiment is performed. The process in FIG. 7 is performed when a login operation is performed on the image forming apparatus 100 while the login control process in the first embodiment is performed.

The verification processing unit 101 determines whether a login operation is performed via the display unit 4 (ACT 301) . When a login operation is performed via the display unit 4 (YES in ACT 301), the verification processing unit 101 performs a pre-encryption verification process (ACT 302). The pre-encryption verification process is a verification process that is performed on the basis of a pre-encryption user name and a pre-encryption password registered in the user database.

Specifically, the verification processing unit 101 performs the pre-encryption verification process on the basis of the user name and the password in the user database and the input user name and the input password. The log recording unit 102 records the result of verification by the verification processing unit 101 on the auxiliary storage device 3 as a log (ACT 303).

Meanwhile, the verification processing unit 101 performs a post-encryption verification process (ACT 304) when a login operation is not performed via the display unit 4 (NO in ACT 301). The post-encryption verification process is a verification process that is performed on the basis of an encrypted user name and an encrypted password registered in the user database.

The verification processing unit 101 performs the post-encryption verification process on the basis of the user name (post-change) and the password (post-change) in the user database and the input user name and the input password. When the user name (post-change) and the password (post change) in the user database match the user name and the password, the verification processing unit 101 determines that the user is valid. In this case, the verification processing unit 101 outputs the date and time of the verification process, the user name (post-change), and the verification result indicating a verification success to the log recording unit 102.

The verification processing unit 101 determines that the user is invalid when the user name (post-change) and the password (post-change) in the user database do not match the user name and the password. In this case, the verification processing unit 101 outputs the date and time of the verification process, the user name (post-change), and the verification result indicating a verification failure to the log recording unit 102. The log recording unit 102 records the result of verification by the verification processing unit 101 on the auxiliary storage device 3 as a log (ACT 303).

According to the image forming apparatus 100 configured as above in the first embodiment, a registered user name and a registered password are encrypted when an attack on the apparatus is detected. Thus, security can be improved.

In addition, notification of the changed user name and the changed password are given for each user. Therefore, even though the user name and the password are changed, a user registered in the image forming apparatus 100 can log in to the image forming apparatus 100. Thus, convenience of use can be improved while improving security.

Regarding attacks on the image forming apparatus 100, the assumption may be made that many of the attacks are made through a network, and local attacks are less frequent than attacks through a network. In the image forming apparatus 100 of the embodiment, a verification process for a login operation from the display unit 4 is performed on the basis of pre-encryption information even when an attack is detected. Therefore, a user performing a login operation from the display unit 4 can use a familiar user name and a familiar password.

Hereinafter, a modification example of the image forming apparatus 100 of the first embodiment will be described.

While the control unit 104 is configured to encrypt a user name and a password in the first embodiment, the control unit 104 may be configured to encrypt only one of a user name and a password.

### Second Embodiment

In a second embodiment, the control unit 104, as the login control process, changes a response time of each process after a login to a longer time than a currently set time.

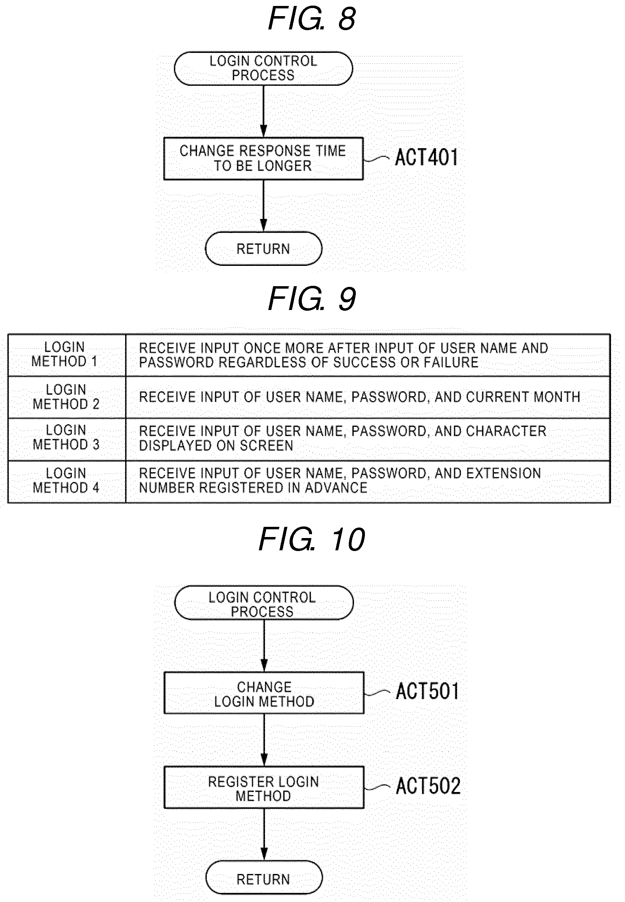

FIG. 8 is a flowchart illustrating the flow of the login control process performed by the control unit 104 in the second embodiment.

The control unit 104 changes the response time of each process after a login to a longer time than a currently set time (ACT 401). For example, the control unit 104 may add a third time (for example, two seconds) to the currently set response time as a new response time. The third time may be set in advance or may be appropriately changed by an administrator. The login control process performed by the control unit 104 in the second embodiment is not performed for a user who is registered in the user database. That is, even when the login control process is performed, the response time of each process for a user registered in the user database remains as the pre-change response time.

According to the image forming apparatus 100 configured as above in the second embodiment, the response time of each process after a login is increased when an attack on the apparatus is detected. Therefore, a user who is attacking the apparatus has to wait for a long time. As a result, the will of the user to attack the apparatus can be decreased, and attacks can be decreased. Thus, security can be improved.

### Third Embodiment

In a third embodiment, the control unit 104 changes a login method as the login control process.

FIG. 9 is a diagram illustrating a list of post-change login methods.

FIG. 9 illustrates four specific examples of a post-change login method. The number of post-change login methods is not limited to four and may be five or more or may be three or less.

Hereinafter, each login method will be specifically described.

First, a login method 1 will be described. The login method 1, as illustrated in FIG. 9, receives input of a user name and a password once more regardless of a success or a failure of verification after a user name and a password are input. This method causes a user to input a user name and a password once more even when verification succeeds or fails after the user inputs a user name and a password.

Next, a login method 2 will be described. The login method 2, as illustrated in FIG. 9, receives input of a user name, a password, and the current month. This method causes a user to input the current month of the time when the user logs in to the apparatus in addition to a user name and a password.

Next, a login method 3 will be described. The login method 3, as illustrated in FIG. 9 receives input of a user name, a password, and a character displayed on the screen. This method displays a character on the screen and causes a user to input the character in addition to a user name and a password. For example, when a user performs a login operation by using an information processing apparatus such as a personal computer, a character is displayed on the information processing apparatus of the user. When a user performs a login operation by operating the display unit 4, a character is displayed on the screen of the display unit 4.

Next, a login method 4 will be described. The login method 4, as illustrated in FIG. 9 receives input of a user name, a password, and an extension number that is registered in advance. This method causes a user to input an extension number registered in the user database in addition to a user name and a password.

Each login method is specifically described so far.

FIG. 10 is a flowchart illustrating the flow of the login control process performed by the control unit 104 in the third embodiment.

The control unit 104 changes a login method (ACT 501). Specifically, the control unit 104 changes a login method by randomly selecting a login method from the login methods illustrated in FIG. 9 as a post-change login method. The control unit 104 then registers the changed login method in the auxiliary storage device 3 (ACT 502).

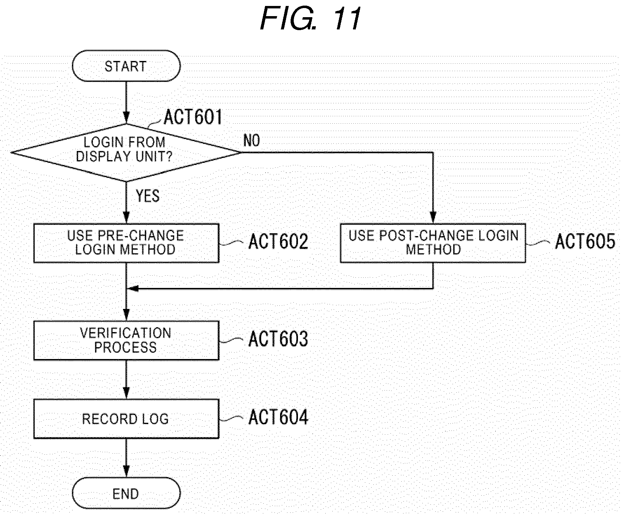

FIG. 11 is a flowchart illustrating the flow of a process when the login control process in the third embodiment is performed. The process in FIG. 11 is performed when a login operation is performed on the image forming apparatus 100 while the login control process in the third embodiment is performed.

The control unit 104 determines whether a login operation is performed via the display unit 4 (ACT 601). When a login operation is performed via the display unit 4 (YES in ACT 601), the control unit 104 performs the login operation in a pre-change login method (ACT 602). When the login operation is performed, the verification processing unit 101 performs a verification process (ACT 603) . The log recording unit 102 then records the result of verification by the verification processing unit 101 on the auxiliary storage device 3 as a log (ACT 604).

Meanwhile, the control unit 104 performs a login operation in a post-change login method (ACT 605) when a login operation is not performed via the display unit 4 (NO in ACT 601) . Specifically, the control unit 104 randomly selects one login method from the list of post-change login methods illustrated in FIG. 9. The control unit 104 then performs a login operation in the selected login method. The process is then performed from ACT 603.

According to the image forming apparatus 100 configured as above in the third embodiment, a login method is changed when an attack on the apparatus is detected. For example, the image forming apparatus 100 applies information other than a user name and a password as information necessary for a login. Furthermore, since a login method is randomly selected from multiple login methods, the applied information is irregular. Thus, security can be improved.

### Fourth Embodiment

In a fourth embodiment, the control unit 104, as the login control process, locks the account of a user who does not log in for a preset period from the last login.

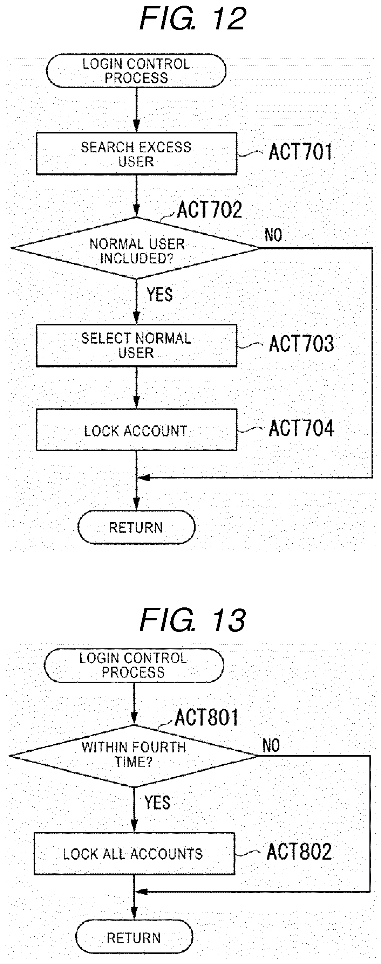

FIG. 12 is a flowchart illustrating the flow of the login control process performed by the control unit 104 in the fourth embodiment.

First, the control unit 104 searches the user database stored on the auxiliary storage device 3 for an excess user (ACT 701). The excess user represents a user of which a predetermined period (for example, 10 days) is passed from the last login. Specifically, the control unit 104 first reads the user database stored on the auxiliary storage device 3. The control unit 104 then searches the read user database for a user, as an excess user, for which a predetermined period is passed from the date and time registered in the last login date and time field.

Next, the control unit 104 determines whether a normal user is included in the searched excess user (ACT 702). When a normal user is not included in the excess user (NO in ACT 702), the control unit 104 ends the login control process.

Meanwhile, the control unit 104 selects a normal user (ACT 703) when a normal user is included in the excess user (YES in ACT 702). The control unit 104 then locks the account of the selected normal user (ACT 704).

According to the image forming apparatus 100 configured as above in the fourth embodiment, the account of a user who is an excess user and also a normal user is locked when an attack on the apparatus is detected. For example, regarding the general use of the image forming apparatus 100, a normal user rarely logs in through a network to use the image forming apparatus 100. Therefore, with the above configuration, the possibility of an unused account being used for a login can be decreased. Thus, security can be improved.

### Fifth Embodiment

In a fifth embodiment, the control unit 104 locks the accounts of all users for a fourth time (a certain time) as the login control process.

FIG. 13 is a flowchart illustrating the flow of the login control process performed by the control unit 104 in the fifth embodiment.

First, the control unit 104 determines whether the current time is within the fourth time (ACT 801). When the current time is not within the fourth time (NO in ACT the control unit 104 ends the login control process.

Meanwhile, the control unit 104 locks the accounts of all users for the fourth time (ACT 802) when the current time is within the fourth time (YES in ACT 801). More specifically, the control unit 104 locks all accounts registered in the user database for the fourth time.

According to the image forming apparatus 100 configured as above in the fifth embodiment, all accounts are locked when an attack on the apparatus is detected. For example, the image forming apparatus 100 is less used during the nighttime when compared with the daytime. Therefore, with the above configuration, the possibility of a login being performed in the time when the image forming apparatus 100 is less used can be decreased. Thus, security can be improved.

According to at least one of the embodiments described above, security can be improved by providing the detecting unit 103 that detects an attack on the apparatus on the basis of a history of logins to the apparatus and the control unit 104 that performs the login control process which controls a predetermined process related to a login to the apparatus when an attack is detected and causing the control unit 104 to change a user name and a password that are registered in advance in the apparatus as the login control process.

The functions of the image forming apparatus 100 in the above embodiments may be realized by a computer. In this case, the functions may be realized by recording a program that is used to realize the functions on a computer-readable recording medium, reading the program recorded on the recording medium into a computer system, and executing the program. The "computer system" includes an OS and hardware such as peripheral devices. The "computer-readable recording medium" is a portable medium such as a flexible disk, a magneto-optical disc, a ROM, or a CD-ROM or a storage device such as a hard disk that is incorporated into the computer system. The "computer-readable recording medium" may include a medium that dynamically holds the program for a short time, like a communication line when the program is transmitted through a network such as the Internet or through a communication line such as a telephone line. The "computer-readable recording medium" may also be a medium that temporarily holds the program, such as a volatile memory in the computer system that serves as a server or a client when the program is transmitted through a network or a communication line. The program may be not only a program that realizes a part of the above functions but also a program that can realize the above functions in combination with a program which is previously recorded in the computer system.

While certain embodiments have been described these embodiments have been presented by way of example only, and are not intended to limit the scope of the inventions. Indeed, the novel embodiments described herein may be embodied in a variety of other forms: The accompanying claims and there equivalents are intended to cover such forms or modifications as would fall within the scope of the invention.

## Claims

1. An image forming apparatus (100) comprising:
a detecting unit (103) configured to detect an attack on the apparatus on the basis of a history of logins to the apparatus;
a control unit (104) configured to perform a login control process which controls a predetermined process related to a login to the apparatus when an attack is detected; and
an auxiliary storage device (3), **characterized in that**
the detecting unit (103) is configured to detect an attack on the apparatus on the basis of a predetermined condition and the log stored on the auxiliary storage device (3) and to detect the end of the attack on the apparatus on the basis of the log stored on the auxiliary storage device (3); and
the control unit (104) is configured to perform a login control process according to the result of detection of the attack on the apparatus by the detecting unit (103) and to end the login control process according to the result of detection of the end of the attack on the apparatus by the detecting unit (103).

2. The apparatus according to claim 1,
wherein the control unit is configured to change a user name and a password that are registered in advance in the apparatus as the login control process.

3. The apparatus according to claim 1 or 2,
wherein the control unit is configured to change a response time of each process after a login to a longer time than a currently set time as the login control process.

4. The apparatus according to any one of claims 1 to 3,
wherein the control unit is configured to change a login method as the login control process.

5. The apparatus according to any one of claims 1 to 4,
wherein the control unit is configured to lock an account of a user who does not log in for a preset period from the last login as the login control process.

6. The apparatus according to any one of claims 1 to 5,
wherein the control unit is configured to lock accounts of all users for a certain time as the login control process.

7. A management method of the image forming apparatus according to any one of claims 1 to 6, comprising:
detecting an attack on an image forming apparatus on the basis of a history of logins to the image forming apparatus;
controlling by performing a login control process that controls a predetermined process related to a login to the image forming apparatus when an attack is detected; and
providing an auxiliary storage device (3), the method **characterized by** further comprising the steps of:
detecting, by the detecting unit (103), an attack on the apparatus on the basis of a predetermined condition and the log stored on the auxiliary storage device (3) and the end of the attack on the apparatus on the basis of the log stored on the auxiliary storage device (3); and
performing, by the control unit (104), a login control process according to the result of detection of the attack on the apparatus by the detecting unit (103) and ending the login control process according to the result of detection of the end of the attack on the apparatus by the detecting unit (103).

8. The method according to claim 7,
wherein the controlling changes a user name and a password that are registered in advance in the apparatus as the login control process.

9. The method according to claim 7 or 8,
wherein the controlling changes a response time of each process after a login to a longer time than a currently set time as the login control process.

10. The method according to any one of claims 7 to 9,
wherein the controlling changes a login method as the login control process.

11. The method according to any one of claims 7 to 10,
wherein the controlling locks an account of a user who does not log in for a preset period from the last login as the login control process.

12. The method according to any one of claims 7 to 11,
wherein the controlling locks accounts of all users for a certain time as the login control process.

## Patentansprüche

1. Bilderzeugungsvorrichtung (100), umfassend:
eine Detektiereinheit (103), die konfiguriert ist, einen Angriff auf die Vorrichtung basierend auf einer Historie von Anmeldungen an der Vorrichtung zu detektieren;
eine Steuereinheit (104), die konfiguriert ist, einen Anmeldesteuerprozess auszuführen, der einen vorbestimmten Prozess steuert, welcher mit einer Anmeldung an der Vorrichtung verbunden ist, wenn ein Angriff detektiert wird; und
eine Hilfsspeichervorrichtung (3), **dadurch gekennzeichnet, dass**
die Detektiereinheit (103) konfiguriert ist, einen Angriff auf die Vorrichtung basierend auf einer vorbestimmten Bedingung und dem Protokoll, das in der Hilfsspeichervorrichtung (3) gespeichert ist, zu detektieren und das Ende des Angriffs auf die Vorrichtung basierend auf dem Protokoll, das in der Hilfsspeichervorrichtung (3) gespeichert ist, zu detektieren; und
die Steuereinheit (104) konfiguriert ist, gemäß dem Resultat der Detektion des Angriffs auf die Vorrichtung durch die Detektiereinheit (103) einen Anmeldesteuerprozess auszuführen und den Anmeldesteuerprozess gemäß dem Resultat der Detektion des Endes des Angriffs auf die Vorrichtung durch die Detektiereinheit (103) zu beenden.

2. Vorrichtung nach Anspruch 1, wobei die Steuereinheit konfiguriert ist, als den Anmeldesteuerprozess einen Benutzernamen und ein Passwort, die im Voraus registriert wurden, in der Vorrichtung zu ändern.

3. Vorrichtung nach Anspruch 1 oder 2, wobei die Steuereinheit konfiguriert ist, als den Anmeldesteuerprozess eine Ansprechzeit jedes Prozesses nach einer Anmeldung in eine längere Zeit als eine gegenwärtig festgelegte Zeit zu ändern.

4. Vorrichtung nach einem der Ansprüche 1 bis 3, wobei die Steuereinheit konfiguriert ist, als den Anmeldesteuerprozess ein Anmeldeverfahren zu ändern.

5. Vorrichtung nach einem der Ansprüche 1 bis 4, wobei die Steuereinheit konfiguriert ist, als den Anmeldesteuerprozess ein Konto eines Benutzers, der sich nicht für einen voreingestellten Zeitraum von der letzten Anmeldung anmeldet, zu sperren.

6. Vorrichtung nach einem der Ansprüche 1 bis 5, wobei die Steuereinheit konfiguriert ist, als den Anmeldesteuerprozess Konten von allen Benutzern für eine bestimmte Zeit zu sperren.

7. Verwaltungsverfahren für die Bilderzeugungsvorrichtung nach einem der Ansprüche 1 bis 6, umfassend:
Detektieren eines Angriffs auf eine Bilderzeugungsvorrichtung basierend auf einer Historie von Anmeldungen an der Bilderzeugungsvorrichtung;
Steuern durch Ausführen eines Anmeldesteuerprozesses, der einen vorbestimmten Prozess steuert, welcher mit einer Anmeldung an der Bilderzeugungsvorrichtung verbunden ist, wenn ein Angriff detektiert wird; und
Bereitstellen einer Hilfsspeichervorrichtung (3), wobei das Verfahren **dadurch gekennzeichnet ist, dass** es ferner die Schritte umfasst:
Detektieren, durch die Detektiereinheit (103), eines Angriffs auf die Vorrichtung basierend auf einer vorbestimmten Bedingung und dem Protokoll, das in der Hilfsspeichervorrichtung (3) gespeichert ist, und des Endes des Angriffs auf die Vorrichtung basierend auf dem Protokoll, das in der Hilfsspeichervorrichtung (3) gespeichert ist; und
Ausführen, durch die Steuereinheit (104), eines Anmeldesteuerprozesses gemäß dem Resultat der Detektion des Angriffs auf die Vorrichtung durch die Detektiereinheit (103) und Beenden des Anmeldesteuerprozesses gemäß dem Resultat der Detektion des Endes des Angriffs auf die Vorrichtung durch die Detektiereinheit (103).

8. Verfahren nach Anspruch 7, wobei das Steuern als den Anmeldesteuerprozess einen Benutzernamen und ein Passwort, die im Voraus registriert wurden, in der Vorrichtung ändert.

9. Verfahren nach Anspruch 7 oder 8, wobei das Steuern als den Anmeldesteuerprozess eine Ansprechzeit jedes Prozesses nach einer Anmeldung in eine längere Zeit als eine gegenwärtig festgelegte Zeit ändert.

10. Verfahren nach einem der Ansprüche 7 bis 9, wobei das Steuern als den Anmeldesteuerprozess ein Anmeldeverfahren ändert.

11. Verfahren nach einem der Ansprüche 7 bis 10, wobei das Steuern als den Anmeldesteuerprozess ein Konto eines Benutzers sperrt, der sich nicht für einen voreingestellten Zeitraum von der letzten Anmeldung anmeldet.

12. Verfahren nach einem der Ansprüche 7 bis 11, wobei das Steuern als den Anmeldesteuerprozess die Konten von allen Benutzern für eine bestimmte Zeit sperrt.

## Revendications

1. Dispositif de formation d'image (100) comprenant :
une unité de détection (103) configurée de manière à détecter une attaque du dispositif sur la base d'un historique de connexions au dispositif ;
une unité de commande (104) configurée de manière à exécuter une opération de commande de connexion qui commande une opération prédéterminée associée à une connexion au dispositif lorsqu'une attaque est détectée ; et
un dispositif de mémorisation auxiliaire (3), **caractérisé en ce que**
l'unité de détection (103) est configurée de manière à détecter une attaque du dispositif sur la base d'une condition prédéterminée et de l'historique mémorisé sur le dispositif de mémorisation auxiliaire (3) et à détecter la fin de l'attaque du dispositif sur la base de l'historique mémorisé sur le dispositif de mémorisation auxiliaire (3) ; et
l'unité de commande (104) est configurée de manière à exécuter une opération de commande de connexion en fonction du résultat de détection de l'attaque du dispositif par l'unité de détection (103) et à achever l'opération de commande de connexion en fonction du résultat de la détection de la fin de l'attaque du dispositif par l'unité de détection (103).

2. Dispositif selon la revendication 1,
dans lequel l'unité de commande est configurée de manière à modifier un nom d'utilisateur et un mot de passe qui ont été enregistrés au préalable dans le dispositif pour l'opération de commande de connexion.

3. Dispositif selon la revendication 1 ou 2,
dans lequel l'unité de commande est configurée de manière à modifier un temps de réponse de chaque opération après une connexion pour un temps plus long qu'un temps couramment défini pour l'opération de commande de connexion.

4. Dispositif selon l'une quelconque des revendications 1 à 3,
dans lequel l'unité de commande est configurée de manière à modifier un procédé de connexion pour l'opération de commande de connexion.

5. Dispositif selon l'une quelconque des revendications 1 à 4,
dans lequel l'unité de commande est configurée de manière à bloquer un compte d'un utilisateur qui ne se connecte pas pendant une période prédéfinie par rapport à la dernière connexion pour l'opération de commande de connexion.

6. Dispositif selon l'une quelconque des revendications 1 à 5,
dans lequel l'unité de commande est configurée de manière à bloquer les comptes de tous les utilisateurs pendant un certain temps pour l'opération de commande de connexion.

7. Procédé de gestion du dispositif de formation d'image selon l'une quelconque des revendications 1 à 6, comprenant :
la détection d'une attaque sur un dispositif de formation d'image sur la base d'un historique de connexions au dispositif de formation d'image ;
la commande par exécution d'une opération de commande de connexion qui commande une opération prédéterminée associée à une connexion au dispositif de formation d'image lorsqu'une attaque est détectée ; et
la fourniture d'un dispositif de mémorisation auxiliaire (3), le procédé étant **caractérisé par le fait qu'**il comprend, en outre, les étapes de :
détection, par l'unité de détection (103), d'une attaque du dispositif sur la base d'une condition prédéterminée et de l'historique mémorisé sur le dispositif de mémorisation auxiliaire (3) et de la fin de l'attaque du dispositif sur la base de l'historique mémorisé sur le dispositif de mémorisation auxiliaire (3) ; et
exécution, par l'unité de commande (104), d'une opération de commande de connexion en fonction du résultat de détection de l'attaque du dispositif par l'unité de détection (103) et arrêt de l'opération de commande de connexion en fonction du résultat de détection de la fin de l'attaque du dispositif par l'unité de détection (103).

8. Procédé selon la revendication 7,
dans lequel la commande modifie un nom d'utilisateur et un mot de passe qui ont été enregistrés au préalable dans le dispositif pour l'opération de commande de connexion.

9. Procédé selon la revendication 7 ou 8,
dans lequel la commande modifie un temps de réponse de chaque opération après une connexion pour un temps plus long qu'un temps couramment défini pour l'opération de commande de connexion.

10. Procédé selon l'une quelconque des revendications 7 à 9,
dans lequel la commande modifie un procédé de connexion pour l'opération de commande de connexion.

11. Procédé selon l'une quelconque des revendications 7 à 10,
dans lequel la commande bloque un compte d'un utilisateur qui ne se connecte pas pendant une période prédéfinie par rapport à la dernière connexion pour l'opération de commande de connexion.

12. Procédé selon l'une quelconque des revendications 7 à 11,
dans lequel la commande bloque des comptes de tous les utilisateurs pendant un certain temps pour l'opération de commande de connexion.
